Europäisches Patentamt

European Patent Office

Office européen des brevets

(11) Veröffentlichungsnummer: **0 328 708 B1**

(12) **EUROPÄISCHE PATENTSCHRIFT**

(45) Veröffentlichungstag der Patentschrift: **06.05.92**

(21) Anmeldenummer: **88102409.5**

(22) Anmeldetag: **19.02.88**

(51) Int. Cl.⁵: **B01D 53/00**, B01D 53/34

(54) **Verfahren zur Reinigung von Abluft.**

(43) Veröffentlichungstag der Anmeldung:
**23.08.89 Patentblatt  89/34**

(45) Bekanntmachung des Hinweises auf die
Patenterteilung:
**06.05.92 Patentblatt  92/19**

(84) Benannte Vertragsstaaten:
**AT BE CH FR LI NL SE**

(56) Entgegenhaltungen:
**EP-A- 0 237 001**
**DE-A- 2 643 211**
**DE-A- 3 423 285**

(73) Patentinhaber: **Keramchemie GmbH**
**Berggarten 1**
**W-5433 Siershahn(DE)**

(72) Erfinder: **Schippert, Egbert, Dipl.-Chem. Dr.**
**Am Metzenbäumchen 13**
**W-5419 Dierdorf-Brückrachdorf(DE)**

(74) Vertreter: **Kossobutzki, Walter, Dipl.-Ing.(FH)**
**Hochstrasse 7**
**W-5419 Helferskirchen(DE)**

EP 0 328 708 B1

# Beschreibung

Die Erfindung bezieht sich auf ein Verfahren zur Reinigung von mit biologisch abbaubaren, insbesondere schwer wasserlöslichen Verunreinigungen belasteter Abluft, bei dem die Abluft durch einen Absorptionsturm geführt wird, in dem die Verunreinigungen von einer Belebtschlamm enthaltenden Waschflüssigkeit absorbiert und anschließend in einem Belebtschlammbecken durch die Mikroorganismen des Belebtschlammes biologisch abgebaut werden.

Aus der Zeitschrift "Staub-Reinhaltung der Luft" (1979), Seiten 308 - 314, ist ein Verfahren zur Reinigung von mit biologisch abbaubaren Verunreinigungen belasteter Abluft bekannt, bei dem die die Verunreinigungen enthaltende Abluft durch einen mit Füllkörpern gefüllten Absorptionsturm geführt wird. Im Gegenstrom zu dieser Abluft wird eine Belebtschlamm-Waschflüssigkeit durch den Absorptionsturm geleitet, die von einem Belebtschlammbecken im Kreislauf umgepumpt wird. Bei der Berührung der Belebtschlamm-Waschflüssigkeit mit der Abluft werden die in der Abluft enthaltenen Verunreinigungen von der Belebtschlamm-Waschflüssigkeit absorbiert. Dabei ist die Absorptionsfähigkeit der Belebtschlamm-Waschflüssigkeit von der Löslichkeit der Verunreinigungen in der Waschflüssigkeit und deren Regenerierung abhängig. In dem Belebtschlammbecken werden die absorbierten Verunreinigungen durch artspezifische Mikroorganismen biologisch abgebaut. Die regenerierte Belebtschlamm-Waschflüssigkeit ist dann wieder fähig, Verunreinigungen aus der Abluft zu absorbieren.

Die Leistungsfähigkeit eines Absorptionsturmes bzw. eines Biowäschers in bezug auf die Reinigungsleistung bei den einzelnen Verunreinigungen ist somit abhängig von der Absorptionskapazität der Belebtschlamm-Waschflüssigkeit und diese wiederum von der Abbaugeschwindigkeit der einzelnen Verunreinigungen im Belebtschlamm durch die entsprechenden Mikroorganismen. Ist die Zufuhr der Verunreinigungen zur Flüssigphase bzw. der Belebtschlamm-Waschflüssigkeit größer als die entsprechende Abbaugeschwindigkeit der jeweiligen Verunreinigungen im Belebtschlammbecken, kommt es zwangsläufig zu einer Anreicherung der Verunreinigungen in der Belebtschlamm-Waschflüssigkeit. Mit fortschreitender Anreicherung der Verunreinigungen nähert sich der Partialdampfdruck der Verunreinigungen über der Flüssigphase derjenigen der Gasphase. Dadurch wird der erreichbare Absorptionswirkungsgrad der Verunreinigungen begrenzt. Bei Schwankungen der Konzentration der Verunreinigungen kann dies dazu führen, daß bereits absorbierte Verunreinigungen wieder ausgetrieben werden. Dies ist insbesondere dann der Fall, wenn der Abluftstrom schwer wasserlösliche Verunreinigungen enthält. Eine Pufferkapazität, mit der Stoßbelastungen aufgefangen werden, besitzt dieses bekannte Verfahren zur Reinigung von biologisch abbaubaren Verunreinigungen enthaltende Abluft nicht. Die Aufnahmefähigkeit der Belebtschlamm-Waschflüssigkeit bei schlecht wasserlöslichen Stoffen ist sehr gering. Diese beträgt beispielsweise bei einer Konzentration von 200 mg/m$^3$ Toluol im Wäschereintritt max. 1 mg/l im Waschwasser, so daß die minimale Waschwassermenge zur Erreichung eines nennenswerten Wirkungsgrades 0,2 bis 0,4 m$^3$ Waschwasser pro m$^3$ Abluft beträgt. Dies ist aus wirtschaftlichen Gründen nicht realisierbar.

Aus der DE-A-32 27 375 ist ein Verfahren zur Reinigung von biologisch abbaubare Verunreinigungen enthaltender Abluft bekannt, bei dem zur Erhöhung des Absorptionswirkungsgrades und zur Erhaltung einer Pufferkapazität zum Auffangen von Stoßbelastungen der Belebtschlamm-Waschflüssigkeit pulverisierte Aktivkohle zugesetzt wird. Durch diese Aktivkohle werden die schwer wasserlöslichen Verunreinigungen zunächst absorbiert und anschließend von den Mikroorganismen des Belebtschlammes wieder abgebaut, d. h., die Aktivkohle wird biologisch regeneriert. Dieses Verfahren hat in der Praxis den Nachteil, daß durch den Zusatz größerer Mengen Aktivkohle der Feststoffgehalt der Belebtschlamm-Waschflüssigkeit ansteigt und damit die Gefahr einer Verstopfung des Waschsystems zunimmt. Insbesondere bei der Anwesenheit von sehr hoch siedenden, d. h., sehr gut adsorbierbaren Verunreinigungen werden diese im Laufe der Zeit praktisch irreversibel an die Aktivkohle gebunden und blockieren dieselbe im Laufe der Zeit für die eigentlich aus der Abluft zu entfernenden, niedriger siedenden Verunreinigungen. Weiterhin erfolgt bei diesem Verfahren der Stoffübergang der zu absorbierenden Verunreinigungen an die Aktivkohle nicht direkt, sondern aus der Abluft über die Belebtschlamm-Waschflüssigkeit zur Aktivkohle. Dabei ist der letzte Schritt bei der Verwendung herkömmlicher Füllkörper-Absorptionstürmegeschwindigkeitsbestimmend und sehr langsam, so daß zum erfolgreichen Einsatz dieses Verfahrens Stoffaustauschapparate mit sehr hoher Turbulenz des Waschwassers eingesetzt werden müssen. Dies sind jedoch nur Wäscher, die einen sehr hohen Energieverbrauch haben, beispielsweise Venturiwäscher, Siebbodenwäscher, Sprudelwäscher, Gasblasenwäscher.

Der Erfindung liegt nun die Aufgabe zugrunde, ein Verfahren zur Reinigung von mit biologisch abbaubaren, insbesondere schwer wasserlöslichen Verunreinigungen belasteter Abluft zu schaffen, bei dem bei der Verwendung von herkömmlichen, einen geringen Energieverbrauch aufweisenden Wäschern bzw. Absorptionstürmen die Gefahr einer Verstopfung des Waschsystems weitgehend ausgeschlossen ist, der erreichbare Absorptionswirkungsgrad gesteigert wird und bei dem eine Pufferkapazität zum Auffangen von Stoßbelastungen vorhanden ist.

Zur Lösung dieser Aufgabe wird gemäß der Erfindung bei dem eingangs beschriebenen Verfahren vorgeschlagen, daß der Belebtschlamm enthaltenden Waschflüssigkeit ein hochsiedendes, organisches Lösemittel zugegeben wird, wobei das Lösemittel einen niedrigen Dampfdruck besitzt, ein hohes Lösevermögen für organische Verunreinigungen aufweist, mit Wasser in Form einer groben Dispersion keine toxischen oder sonstige schädlichen Wirkungen auf Mikroorganismen ausübt, eine möglichst geringe Löslichkeit in Wasser besitzt und selbst eine geringe biologische Abbaubarkeit aufweist.

Als besonders geeignete Lösungsmittel haben sich die Alkylphthalate, wie Dioctylphthalat oder Dinonylphthalat erwiesen.

In Abhängigkeit von der Wasserlöslichkeit der zu absorbierenden und biologisch abzubauenden Verunreinigungen und deren jeweiliger Konzentration kann das Verhältnis von organischer und wäßriger Phase des Absorptionsmittels frei gewählt werden, damit ein optimaler Wirkungsgrad erreicht wird. Im Extremfall ist es auch beim Vorliegen von ausschließlich sehr schlecht wasserlöslichen Verunreinigungen möglich, den eigentlichen Absorptionsvorgang nur mit dem hochsiedenen, organischen Lösemittel durchzuführen. Dabei wird das mit den Verunreinigungen beladene, organische Waschmittel in einem externen, belüfteten Behälter durch innige Vermischung mit Wasser, das den adaptierten Belebtschlamm enthält, biologisch regeneriert. In einer Absetz- oder Flotationseinheit wird das hochsiedene Lösemittel wieder vom Wasser-Belebtschlammgemisch getrennt und das regenerierte hochsiedende Lösemittel wieder dem Absorptionsturm zugeführt.

Da die Geschwindigkeit des biologischen Abbaus in erster Näherung proportional zur stationären Konzentration in der wäßrigen Phase ist, kann es, um die Gesamtgröße des Belebungsbeckens zu minimieren, sinnvoll sein, zwei oder mehrere hintereinander geschaltete, kleinere Belebungsbecken vorzusehen. Dabei ist es auch möglich, eine zwei- oder mehrstufige Absorptionsanlage vorzusehen, bei der jeder Absorptionsstufe ein getrenntes Belebungsbecken zugeordnet ist.

Weitere Merkmale eines Verfahrens gemäß der Erfindung sind in den Ansprüchen 2 - 7 offenbart.

Das erfindungsgemäße Verfahren wird nachfolgend anhand eines in einer Zeichnung schematisch dargestellten Ausführungsbeispieles näher erläutert.

Dabei wird ein Verfahren zur biologischen Reinigung der Abluft einer Lackieranlage beschrieben. In einer solchen Lackieranlage fallen stündlich etwa 10 000 m$^3$ Abluft an, die als Verunreinigungen neben in Wasser gut löslichen Lösemitteln, wie Alkohole, Glykoläther und Glykolester, auch sehr schlecht lösliche Lösemittel wie Aromate oder Benzinkohlenwasserstoffe, beispielsweise 200 mg/m$^3$ Äthanol und 200 mg/m$^3$ Xylol enthält. Über eine Leitung 1 wird diese Abluft einer Reinigungsvorrichtung zugeleitet. Diese Reinigungsvorrichtung besteht in diesem Ausführungsbeispiel aus einem einstufigen, mit einer Füllkörperschicht 2 versehenen Absorptionsturm 3, der an seinem unteren Ende in ein Belebtschlammbecken 4 übergeht, welches gleichzeitig den sogenannten Sumpf für den Absorptionsturm 3 bildet. Die Leitung 1 mündet seitlich über dem Belebtschlammbecken 4 in den Absorptionsturm 3, während am oberen Ende des Absorptionsturmes 3 eine Austrittsöffnung 5 für die gereinigte Abluft vorhanden ist. Oberhalb der Füllkörperschicht 2 befindet sich eine Rohrleitung 6, die mit mehreren, gleichmäßig über den Querschnitt des Absorptionsturmes 3 verteilt angeordneten Sprühdüsen 7 versehen ist. Über eine Pumpe 8 wird die Flüssigkeit aus dem Belebtschlammbecken 4 durch die Sprühdüsen 7 auf die Füllkörperschicht 2 versprüht bzw. verteilt.

Im dargestellten Ausführungsbeispiel ist das Belebtschlammbecken 4 dreistufig ausgebildet und besteht aus drei kaskadenartig hintereinander angeordneten Becken 4a, 4b, 4c. Während das Becken 4a einen Inhalt von 20 m$^3$ aufweist, besitzen die Behälter 4b und 4c einen Inhalt von jeweils 30 m$^3$. Alle drei Behälter 4a, 4b, 4c sind beispielsweise mit einem Tauchbelüfter 9 versehen, durch den das Gemisch nicht nur belüftet, sondern gleichzeitig auch gerührt wird.

Die Waschflüssigkeit besteht in diesem Ausführungsbeispiel aus 70 % Wasser mit 3 g/l an Äthanol und Xylol adaptierten Mikroorganismen sowie aus 30 % Dinonylphthalat. In der Waschflüssigkeit wird ein pH-Wert von 5 bis 9 aufrecht erhalten, in dem beispeilsweise aus einem Behälter 10 Natronlauge zudosiert wird. Zusätzlich sind Behälter 11, 12 zur Aufnahme von Stickstoff und Phosphor vorgesehen, die zur Aufrechterhaltung der Biozönose in der Waschflüssigkeit erforderlich sind.

Die mit den Verunreinigungen beladene Abluft wird dem Absorptionsturm 3 von unten zugeführt. Im Gegenstrom zur Abluft wird die Waschflüssigkeit über die Düsen 7 auf die Füll körperschicht 2 versprüht. In der Füllkörperschicht 2 findet der Stoffaustausch von der Abluft zur Waschflüssigkeit statt. Dabei bewirkt die Füllkörperschicht 2 bei einer großen freien Durchgangsfläche eine starke Verwirbelung von Abluft und Waschflüssigkeit und damit einen hohen Grad an Oberflächenerneuerung, was für einen guten Stoffübergang entscheidend ist. Nachdem die Waschflüssigkeit, mit den Verunreinigungen beladen, die Füllkörperschicht 2 verlassen hat, läuft sie in das Becken 4a des Belebtschlammbeckens 4 zurück. Die biologische Regeneration der beladenen Waschflüssigkeit bzw. der Abbau der absorbierten Verunreinigungen erfolgt in dem Belebtschlammbecken 4. Dabei wird im Becken 4a überwiegend das zum größten Teil in der wäßrigen Phase absorbierte Äthanol abgebaut, während in den Becken 4b und 4c das Dinonylphthalat durch Abbau des Xylols regeneriert wird.

Um eine Aufsalzung und eine evtl. Anreicherung der Waschflüssigkeit mit biologischen Hemmstoffen zu verhindern, werden etwa 500 l/h der Waschflüssigkeit über eine Pumpe 13 aus dem Waschflüssigkeits-Kreislauf abgezogen und einem Flotationsbehälter 14 zugeführt. In diesem Flotationsbehälter 14 wird das hochsiedende Lösemittel mit dem Belebtschlamm aus der Waschflüssigkeit durch Flotation abgetrennt und über eine Leitung 15 in das Becken 4b des Belebtschlammbeckens 4 zurückgeführt. Das geklärte Wasser wird aus dem Flotationsbehälter 14 über eine Leitung 16 der Kanalisation zugeleitet.

Die über die Leitung 5 auftretende, gereinigte Abluft weist einen Gehalt von 10 mg/m$^3$ Äthanol und 30 mg/m$^3$ Xylol auf. Der Gehalt an Dinonylphthalat ist kleiner als 10 mg/m$^3$. Der Dinonylphthalat-Verbrauch durch den biologischen Abbau in dem Belebungsbecken 4 ist geringer als 10 mg/1 h. Der Dinonylphthalat-Verbrauch wird über einen Behälter 17 aufgefüllt. Die Anwesenheit des hochsiedenden, organischen Lösemittels hat keinen negativen Einfluß auf den Abbau der Verunreinigungen.

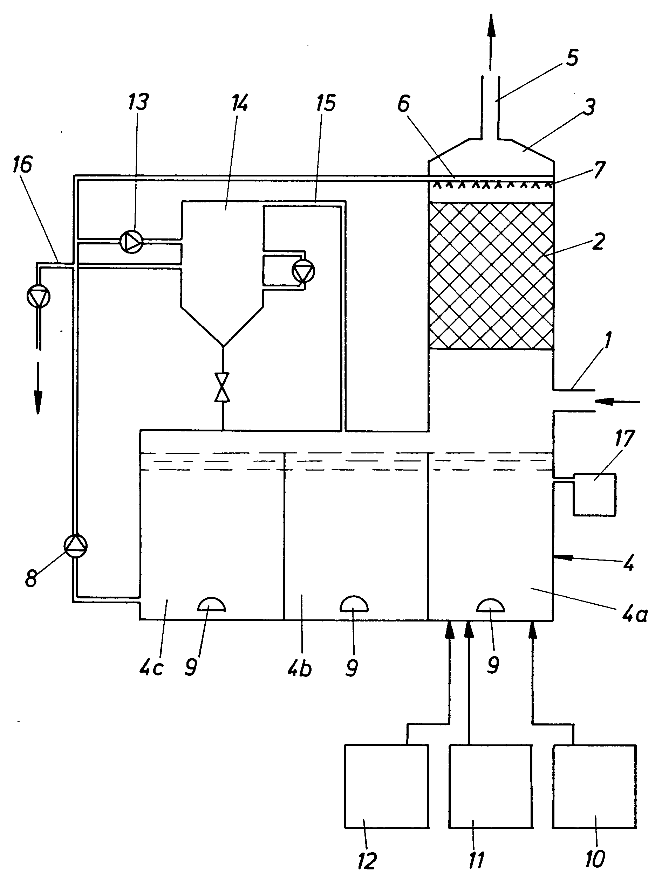

**Patentansprüche**

1. Verfahren zur Reinigung von mit biologisch abbaubaren, insbesondere schwer wasserlöslichen Verunreinigungen belasteter Abluft, bei dem die Abluft durch einen Absorptionsturm geführt wird, in dem die Verunreinigungen von einer Belebtschlamm enthaltenden Waschflüssigkeit absorbiert und anschließend in einem Belebtschlammbecken durch die Mikroorganismen des Belebtschlammes biologisch abgebaut werden,
dadurch gekennzeichnet,
daß der Belebtschlamm enthaltenden Waschflüssigkeit ein hochsiedendes, organisches Lösemittel zugegeben wird, wobei das Lösemittel einen niedrigen Dampfdruck besitzt, ein hohes Lösevermögen für organische Verunreinigungen aufweist, mit Wasser in Form einer groben Dispersion keine toxischen oder sonstige schädlichen Wirkungen auf Mikroorganismen ausübt, eine möglichst geringe Löslichkeit in Wasser besitzt und selbst eine geringe biologische Abbaubarkeit aufweist.

2. Verfahren nach Anspruch 1,
dadurch gekennzeichnet,
daß der Waschflüssigkeit 1 % bis nahezu 100 % des Lösemittels zugegeben werden.

3. Verfahren nach den Ansprüchen 1 und 2,
dadurch gekennzeichnet,
daß der Waschflüssigkeit 30 % des Lösemittels zugegeben wird.

4. Verfahren nach einem der Ansprüche 1 - 3,
dadurch gekennzeichnet,
daß der Waschflüssigkeit Dialkylphthalate als Lösemittel zugegeben werden.

5. Verfahren nach Anspruch 1,
dadurch gekennzeichnet,
daß der Waschflüssigkeit Dioctylphthalat oder Dinonylphthalat zugegeben wird.

6. Verfahren nach einem der Ansprüche 1 - 5,
dadurch gekennzeichnet,
daß in der Waschflüssigkeit ein pH-Wert von 5 - 9 aufrechterhalten wird.

7. Verfahren nach einem der Ansprüche 1 - 6,
dadurch gekennzeichnet,
daß die Waschflüssigkeit kaskadenartig durch das mehrteilige Belebtschlammbecken geführt wird.

**Claims**

1. Method for the decontamination of exhaust air charged with biologically degradable, particularly hard-soluble, impurifications, in which the exhaust air is led through an absorption column, in which the impurifications are absorbed by an activated sludge-containing washing solution, and afterwards biologically degraded in an activated sludge basin by the micro-organisms in the activated sludge,
characterized thereby,
that the washing solution containing the activated sludge is supplemented with an anti-ebullient, organic solvent, whereby the solvent has a low vapour pressure, shows a high solvent power against organic contaminants, does not have a toxic effect or other adverse effects on micro-organisms when combined with water as a dispersive, has a low-solubility in water and itself possesses a slight biological degradability.

2. Method according to claim 1,
characterized thereby,
that 1% up to almost 100% of the solvent is added to the washing solution.

3. Method according to claims 1 and 2,
characterized thereby,
that 30% of the solvent is added to the washing solution.

4. Method according to at least one of the claims 1 - 3,
characterized thereby,
that dialcylphatalates are added to the washing solution as the solvent.

5. Method according to claim 1,
characterized thereby,
that dioctylphtalate or dinonylphthalate is added to the washing solution.

6. Method according to at least one of the claims 1 - 5,
characterized thereby,
that the pH content in the washing solution is held constant at 5 - 9.

7. Method according to at least one of the claims 1 - 6,
characterized thereby,
that the washing solution flows in a cascade manner through the multisectional activated sludge basin.

**Revendications**

1. Procédé pour l'épuration des effluents gazeux chargés de matières nocives difficilement solubes danes l' eau, mais biologiquement dégradables. Dans ce procédé, les effluents gazeux seront amenés dans une tour d' absorption, où les éléments polluants seront absorbés par un fluide de lavage contenant les boues activées, et ils seront alors envoyés dans un bac de boues activées, où ceux-ci seront dégradés biologiquement par les microorganismes de la boue activée,
caractérisé par le fait que
un solvant organique à point d'ébullition élevé sera ajouté au fluide de lavage contenant la boue activée et ce solvant organique a une basse pression de vapeur, il montre un haut pouvoir de solubilité pour les matières nocives organiques et, avec de l' eau sous forme d'une dispersion grossière, il n'exerce aucune action toxique ou nuisible sur les microorganismes, il est peu soluble dans l'eau et présente luiméme une faible dégradation biologique.

2. Procédé selon la revendication 1,
caractérisé par le fait que
1% jusqu'à presque 100% du solvant sera ajouté au fluide de lavage.

3. Procédé selon la revendications 1 et 2,
caractérisé par le fait que
30% du solvant sera ajouté au fluide de lavage.

4. Procédé selon au moins une des revendications 1 à 3,
caractérisé par le fait que
du dialkylphthalate sera utilisé comme solvant et ajouté au fluide de lavage.

5. Procédé selon la revendications 1,
caractérisé par le fait que
du Dioctylphthalat ou du Dinonylphthalat sera ajouté au fluide de lavage.

6. Procédé selon au moins une des revendications 1 à 5,
caractérisé par le fait que
une valeur de pH de 5 - 9 sera maintenue dans le fluide de lavage.

7. Procédé selon au moins une des revendications 1 à 6,
caractérisé par le fait que
le fluide de lavage coule en cascasde dans le bac de boues activées à parties.